# EUROPEAN PATENT APPLICATION

(11) **EP 4 656 499 A1**
(43) Date of publication of application: **03.12.2025**
(21) Application number: 24784685.0
(22) Date of filing: 12.03.2024
(51) Int. Cl.: B62D 21/00

(54) **SUB-FRAME STRUCTURE OF AUTOMOBILE**

(30) Priority: 03.04.2023 JP 2023059967
(71) Applicant: JFE Steel Corporation, Tokyo 100-0011 (JP)
(72) Inventor: YAMAGUCHI, Naoki, Tokyo 100-0011 (JP)
(74) Representative: Hoffmann Eitle
(86) International application number: PCT/JP2024/009580
(87) International publication number: WO 2024/209890

(57) **Abstract**

A sub-frame structure 1 of an automobile according to the present invention includes: a pair of right and left side members 10 extending in a vehicle front-rear direction and provided with suspension arm coupling portions 11 and 13 at two positions in the vehicle front-rear direction; and a cross member 20 extending in a vehicle width direction and having both end portions respectively connected to the right and left side members 10. A hollow bent protrusion portion 15 that protrudes to a vehicle front side relative to the cross member 20 and that is inclined to a vehicle exterior side in the vehicle width direction and bent in a crank shape is provided at a leading end portion 10a of each of the side members 10.

## Description

### Field

The present invention relates to a sub-frame structure of an automobile with improved crashworthiness to a front crash of a vehicle.

### Background

There is an automotive body of an automobile in which automotive body a sub-frame that couples a suspension arm and the automotive body is installed. The sub-frame generally has a configuration in which both end portions of a cross member extending in a vehicle width direction are connected to a pair of right and left side members extending in a vehicle front-rear direction. Examples of the sub-frame include what is provided with two cross members separated from each other in the vehicle front-rear direction and has a hash shape in a top view, and what is provided with one cross member on a vehicle rear side and has an H-shape in the top view. In addition, the side members and the cross member are not limited to be separate parts connected by other parts, and side members and a cross member may be integrated.

Although the sub-frame is generally arranged in a manner of avoiding an engine in a case of a gasoline powered automobile, there is no need in a case of a battery electric vehicle. However, since the battery electric vehicle needs to be equipped with a battery, vehicle weight increases. Thus, in a sub-frame of the battery electric vehicle, crashworthiness assuming a front crash of the vehicle, which has not been regarded as important in a conventional gasoline powered automobile is required.

In related art, for example, as disclosed in Patent Literature 1 to 3, technologies related to a sub-frame structure with improved front crashworthiness have been proposed.

Patent Literature 1 discloses a front sub-frame structure including a deformation promoting portion provided on a pair of right and left vertical members (corresponding to side members of the present application) that extend in a vehicle front-rear direction and promote downward folding deformation of each of the vertical members at the time of a vehicle crash. Furthermore, according to Patent Literature 1, it is assumed that each of the vertical members can be reliably folded by the deformation promoting portion and a collision load can be reliably absorbed at the time of the vehicle crash, and transmission of the collision load from a front sub-frame to an automotive body side can be controlled.

In addition, Patent Literature 2 discloses a vehicle sub-frame including a second cross member that couples portions of a first side member and a second side member extending while deflecting outward in a width direction toward a front side of a vehicle which portions have a larger degree of deflection. According to Patent Literature 2, it is assumed that when a front collision load is applied to one of the first side member or the second side member in an offset impact or the like, the collision load can be transmitted to the other side member and dispersed while unnecessary deformation of the one side member is controlled.

Furthermore, Patent Literature 3 discloses a vehicle sub-frame in which a coupling member is coupled to portions that are separated from a cross member on a rear side of an automotive body and separated from each other in a front-rear direction with respect to side members, and a fragile portion is provided between coupling portions of the coupling member in each of the side members. According to Patent Literature 3, it is assumed that strength and stiffness of the vehicle sub-frame can be improved by the coupling member and necessary crashworthiness can be exerted by the vehicle sub-frame by appropriate arrangement of the fragile portions with respect to the coupling portions of the coupling member.

### Citation List

### Patent Literature

Patent Literature 1: Japanese Patent Application Laid-open No. 2020-50213
Patent Literature 2: Japanese Patent Application Laid-open No. 2022-074054
Patent Literature 3: Japanese Patent Application Laid-open No. 2020-164094

### Summary

### Technical Problem

In the technologies of Patent Literature 1 and 3, folding deformation is generated in the side members and a part of energy of movement received by the vehicle at the time of a crash is absorbed. However, there is a problem that crashworthiness energy cannot be absorbed in a transient stage in which elastic deformation is generated at an initial stage of the crash until folding deformation is generated in the side members.

In addition, in the technology of Patent Literature 2, a crash box that crushes and absorbs crashworthiness energy at the time of a front crash is arranged in front of the side members, and the crashworthiness energy is absorbed even at an initial stage of the crash until folding deformation is generated in the side members. However, for example, in a battery electric vehicle, since a short nose in a leading end portion of the vehicle is developed due to an increase in a size of a loading battery to increase a cruising distance and expansion of a cabin, it is necessary to shorten a deformation portion necessary for crashworthiness energy absorption. Thus, it has been difficult to apply the technology of Patent Literature 2, in which the crash box having a predetermined length needs to be arranged to absorb desired crashworthiness energy, to a battery electric vehicle.

The present invention has been made to solve the above problems, and an object thereof is to provide a sub-frame structure of an automobile in which structure crashworthiness energy is absorbed at a transient stage of an initial stage of a crash, and a portion that absorbs the crashworthiness energy is shortened.

### Solution to Problem

To solve the problem and achieve the object, a sub-frame structure according to the present invention is the sub-frame structure of an automobile. The sub-frame structure includes: a pair of right and left side members extending in a vehicle front-rear direction and provided with suspension arm coupling portions at two positions in the vehicle front-rear direction; and a cross member extending in a vehicle width direction and having both end portions respectively connected to the right and left side members, wherein a hollow bent protrusion portion that protrudes toward a vehicle front side relative to the cross member and is inclined toward a vehicle exterior side in the vehicle width direction and bent in a crank shape is provided at a leading end portion of each of the side members.

Moreover, an opening portion may be formed in a side surface portion on a vehicle exterior side at an inclined portion inclined to the vehicle exterior side in the vehicle width direction in the bent protrusion portion.

Moreover, in the bent protrusion portion, a hollow cross-section closing longitudinal wall portion that connects an upper surface and a lower surface and that closes all or a part of a hollow cross-section may be provided on an inner surface side of a trough portion on a vehicle interior side in the crank-shaped bending.

Moreover, the hollow cross-section closing longitudinal wall portion may close 1/3 or more of a hollow cross-section of the bent protrusion portion.

Moreover, the bent protrusion portion may have a shape in which a leading end thereof is closed.

Moreover, each of the side members may be formed of a steel sheet having tensile strength of 590 MPa-grade or more.

### Advantageous Effects of Invention

A sub-frame structure according to the present invention includes a pair of right and left side members and a cross member, in which each of the side members has a bent protrusion portion that protrudes toward a vehicle front side relative to the cross member, and that is inclined toward a vehicle exterior side in a vehicle width direction and bent in a crank shape. As a result, at a stage of transient elastic deformation at an initial stage of a crash until plastic deformation is generated in the side members at the time of a front crash of a vehicle, plastic deformation in which the bent protrusion portions are crushed into a bellows shape is generated and crashworthiness energy can be absorbed. Furthermore, in the sub-frame structure according to the present invention, a length of the bent protrusion portions in the vehicle front-rear direction may be set to a degree necessary for absorbing the crashworthiness energy at the initial stage of the crash. Thus, application to a battery electric vehicle or the like in which a nose in a vehicle leading end portion is short is also possible.

### Brief Description of Drawings

FIG. 1 is a top view for describing a sub-frame structure of an automobile according to an embodiment of the present invention.
FIG. 2 is a view for describing a bent protrusion portion in the sub-frame structure of an automobile according to the embodiment of the present invention ((a) top view and (b) side view).
FIG. 3 is a view illustrating a deformation behavior of the bent protrusion portion which behavior is acquired by a front crashworthiness analysis of a vehicle including the sub-frame structure of an automobile according to the embodiment of the present invention (part 1: (a) at a start of a crash, (b) an intrusion amount of a rigid wall 4 mm, and (c) the intrusion amount 20 mm).
FIG. 4 is a view illustrating a deformation behavior of the bent protrusion portions which behavior is acquired by a front crashworthiness analysis of the vehicle including the sub-frame structure of an automobile according to the embodiment of the present invention (part 2: (d) the intrusion amount of the rigid wall 40 mm, and (e) the intrusion amount 80 mm).
FIG. 5 is a view for describing a hollow cross-section closing longitudinal wall portion installed inside the bent protrusion portion provided at a leading end portion of a side member in the sub-frame structure of an automobile according to the present invention.
FIG. 6 is a view illustrating an example of a patch component provided as the hollow cross-section closing longitudinal wall portion inside the bent protrusion portion in the sub-frame structure of an automobile according to the present invention.
FIG. 7 is a view illustrating an example of a reinforcement component provided at the leading end portion of the side member as a part of the bent protrusion portion in the sub-frame structure of an automobile according to the present invention.
FIG. 8 is an enlarged view of a bent protrusion portion provided at a leading end portion of a side member in a sub-frame structure to be examined for crashworthiness against a front crash of a vehicle in an example ((a) a hollow bent protrusion portion, (b) a bent protrusion portion in which a patch component is installed, and (c) a bent protrusion portion formed by joining of a reinforcement component to a leading end portion of a substantially hollow member in which a hollow cross-section closing longitudinal wall portion is formed at a leading end).
FIG. 9 is a graph of a load-displacement curve acquired by a crashworthiness analysis in which a rigid wall collides with a vehicle having a sub-frame structure according to first to third invention examples from a front in the example.

### Description of Embodiments

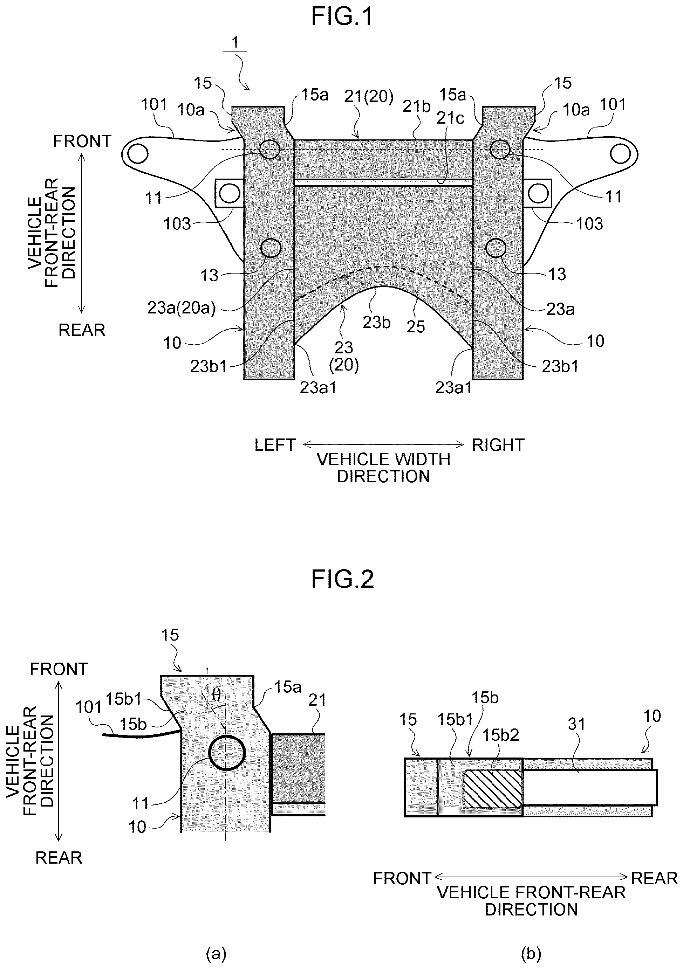

As illustrated in FIG. 1 as an example, a sub-frame structure 1 according to the present embodiment includes side members 10 and cross members 20. Furthermore, the sub-frame structure 1 is provided with a suspension arm 101, and a mounting portion 103 with respect to an automotive body. Hereinafter, each configuration of the sub-frame structure 1 will be described. In the drawings of the present application, "front and rear" indicates a vehicle front-rear direction, "right and left" indicates a vehicle width direction (right-left direction in a traveling direction of the vehicle), and "up and down" indicates a vehicle vertical direction.

### <Cross member>

As illustrated in FIG. 1, each of the cross members 20 extends in the vehicle width direction and has both end portions respectively connected to the right and left side members 10. In the sub-frame structure 1 according to the present embodiment, the two cross members 20 that are a substantially rectangular cross-section hollow member 21 and a panel-shaped member 23 are provided.

### <Side member>

As illustrated in FIG. 1, the side members 10 are a pair of right and left members extending in the vehicle front-rear direction and provided with suspension arm coupling portions 11 and 13 at two positions in the vehicle front-rear direction. A leading end portion 10a of each of the side members 10 has a hollow bent protrusion portion 15 that protrudes toward a vehicle front side relative to the substantially rectangular cross-section hollow member 21, which is the cross member 20 and arranged on the vehicle front side, and that is inclined toward a vehicle exterior side in the vehicle width direction and bent in a crank shape.

### <Effect>

In the sub-frame structure 1, a trough portion 15a on a vehicle inner side of the bent protrusion portion 15 that is inclined toward an automotive body side and bent in the crank shape is a portion serving as a starting point where the bent protrusion portion 15 is crushed (plastically deformed) in the vehicle front-rear direction when a collision load is applied from the vehicle front side at the time of a front crash. Thus, in the bent protrusion portion 15 of the sub-frame structure 1, crashworthiness energy can be absorbed at an initial stage of the crash before the side member 10 is plastically deformed. In addition, in the sub-frame structure 1 of the automobile according to the present first embodiment, a part of the crashworthiness energy is shared and absorbed by the bent protrusion portion 15. As a result, an amount of the crashworthiness energy absorbed by the side member 10 is reduced, and improvement in collision strength, single input strength (deformation strength with respect to one load input), and fatigue strength of the side member 10 can also be expected. Furthermore, by reducing a sheet thickness of each automotive body component in such a manner as to offset the improvement in crashworthiness, it is also possible to reduce the weight while maintaining a structure equivalent to that of a conventional sub-frame structure.

A length of the bent protrusion portion 15 in the vehicle front-rear direction may be set to a degree necessary for absorbing the crashworthiness energy at the initial stage of the crash. Thus, the sub-frame structure 1 can also be preferably applied to a battery electric vehicle in which a nose is developed to be short in a vehicle leading end portion.

### <Suitable sub-frame structure>

As illustrated in FIG. 2, the bent protrusion portion 15 preferably has an opening portion 15b2 formed in a side surface portion 15b1 on the vehicle exterior side in an inclined portion 15b inclined to the vehicle exterior side in the vehicle width direction in a top view. This will be described on the basis of an analysis result acquired by performance of a crashworthiness analysis in which a vehicle including the sub-frame structure 1 illustrated in FIG. 1 collides with a wall in front, and acquiring a deformation behavior in which the bent protrusion portion 15 is crushed by reception of the collision load from the front of the vehicle.

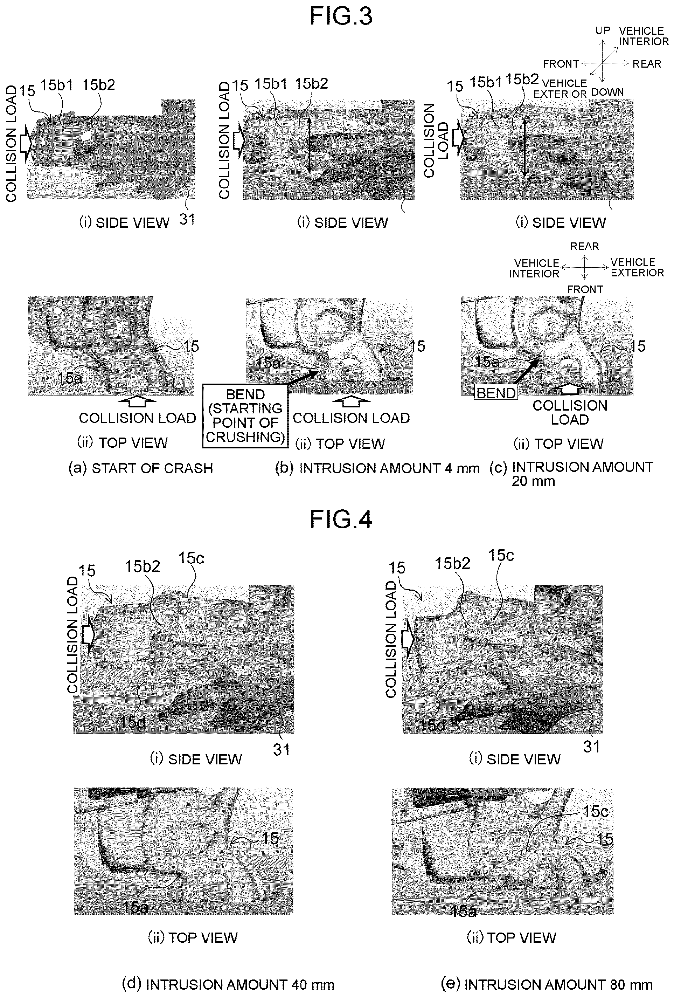

The side surface portion 15b1 in which the opening portion 15b2 is formed is opposed to the trough portion 15a serving as a starting point of crushing in the vehicle front-rear direction when the collision load is applied from the front of the vehicle (FIG. 3(a)). Thus, when the collision load is applied from the front of the vehicle, bending is started with the trough portion 15a of the bent protrusion portion 15 as the starting point of the crushing (FIG. 3(b)). Then, when the collision progresses and the wall intrudes, the opening portion 15b2 provided in the side surface portion 15b1 on the vehicle exterior side opposed to the trough portion 15a is crushed in the vehicle front-rear direction and deformed in such a manner as to be spread in the vehicle vertical direction (FIGS. 3(b) to (c)).

This deformation of the opening portion 15b2 promotes bending with the trough portion 15a as the starting point, and as an intrusion amount of the wall progresses from 40 mm to 80 mm, plastic deformation in which an upper surface 15c and a lower surface 15d of the bent protrusion portion 15 are crushed (buckled and deformed) in a bellows shape is generated as illustrated in FIG. 4(d) and (e). As described above, since the opening portion 15b2 is formed in the side surface portion 15b1 on the vehicle exterior side of the bent protrusion portion 15, it is possible to promote bellows-shaped crushing at the initial stage of the crash and to increase a crashworthiness energy absorption amount.

In the bent protrusion portion 15, in order to stably cause the crushing (buckling deformation) starting from the trough portion 15a, an inclination angle (θ illustrated in FIG. 2) of the inclined portion 15b in the vehicle front-rear direction is preferably 10° to 45° (θ = 30° in FIG. 2). When the inclination angle is smaller than 10°, there is a possibility that the position of the starting point where crushing is generated in the bent protrusion portion 15 fluctuates and stable crushing is not generated. In addition, when the inclination angle is larger than 45°, a component of force in the vehicle front-rear direction of the collision load input to a leading end of the bent protrusion portion 15 decreases and the crashworthiness energy absorption amount due to crushing of the bent protrusion portion 15 in the vehicle front-rear direction decreases, which is not preferable.

The crashworthiness energy absorption amount by crushing of the bent protrusion portion 15 can be increased as a load (buckling strength) at the initial stage of the crash at which the crushing (buckling deformation) is started is higher. In order to improve the buckling strength of the bent protrusion portion 15, it is effective to control cross-section collapsing of the hollow bent protrusion portion 15 due to the deformation of the opening portion 15b2.

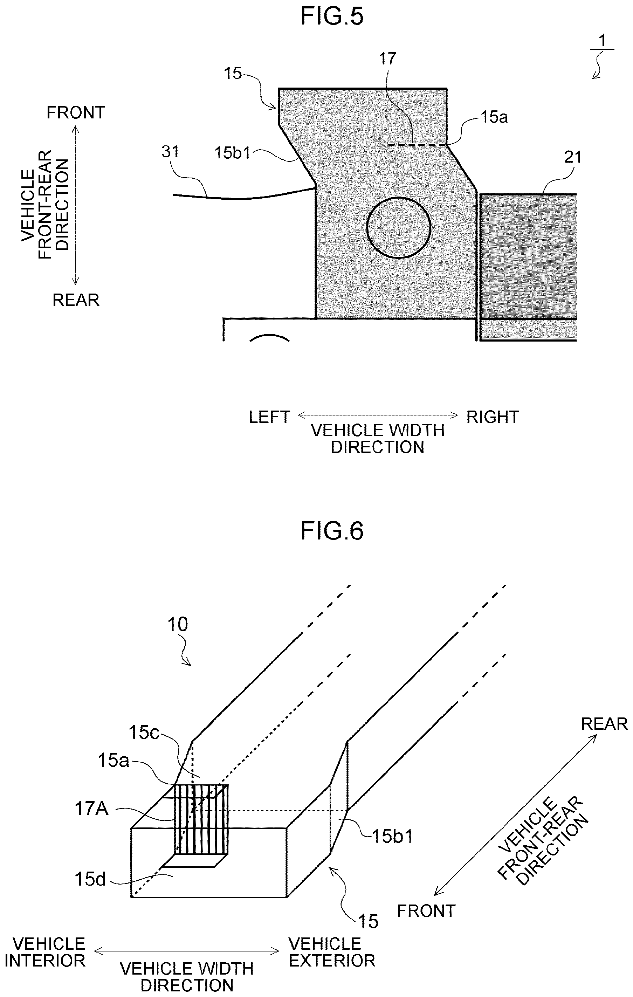

Thus, in the bent protrusion portion 15, as illustrated in FIG. 5, it is preferable that a hollow cross-section closing longitudinal wall portion 17 that connects the upper surface 15c and the lower surface 15d and closes all or a part of a hollow cross-section is provided on an inner surface side of the trough portion 15a on the vehicle interior side in the crank-shaped bending inclined to the vehicle exterior side. As a result, it is possible to improve the buckling strength of the bent protrusion portion 15 and to improve the crashworthiness energy absorption amount.

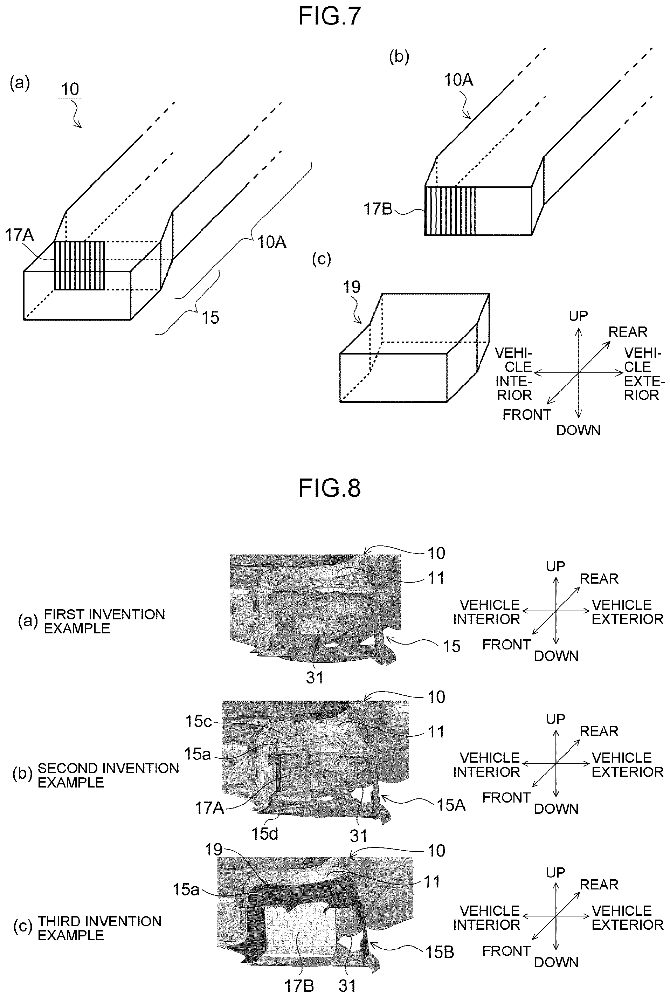

Specific examples of the bent protrusion portion 15 provided with the hollow cross-section closing longitudinal wall portion 17 include structures illustrated in FIG. 6 and FIG. 7(a).

FIG. 6 is a view illustrating the bent protrusion portion 15 in which a patch component 17A is installed on the inner surface side of the trough portion 15a as the hollow cross-section closing longitudinal wall portion. On the other hand, in FIG. 7(a), a hollow cross-section is closed by a hollow cross-section closing longitudinal wall portion 17B formed by bending of a wall surface at a leading end portion of the substantially hollow member 10A (FIG. 7(b)), and a reinforcement component 19 corresponding to the leading end portion of the bent protrusion portion 15 is joined (FIG. 7(c)).

In the hollow cross-section closing longitudinal wall portion 17, 1/3 (33%) or more of the hollow cross-section of the bent protrusion portion 15 is preferably closed. When less than 1/3 is closed, an effect of controlling the cross-section collapsing of the bent protrusion portion 15 accompanying the deformation of the opening portion 15b2 formed in the side surface portion 15b1 on the vehicle exterior side of the bent protrusion portion 15 is small, and the buckling strength cannot be sufficiently improved.

In addition, it is preferable that the bent protrusion portion 15 has a shape in which a leading end on the vehicle front side is closed. As a result, it is possible to control the deformation of the leading end of the bent protrusion portion 15 and to prevent the buckling strength from being lowered in the front crash of the vehicle. In order to form the shape having the closed leading end, for example, a plate-shaped member may be joined to the leading end of the bent protrusion portion 15.

In the sub-frame structure according to the present invention, the side member is preferably made of a steel sheet having tensile strength of 590 MPa-grade or more. As a result, not only the collision strength from the front of the vehicle can be increased, but also the deformation strength and the fatigue strength can be improved. On the other hand, a material of the cross members is not specifically limited, and may be appropriately selected according to the required collision strength and deformation strength.

In the present invention, as described above, the bent protrusion portion absorbs the crashworthiness energy by being crushed at the initial stage of the crash at which stage the collision load is input from the front of the vehicle. However, in a late stage of the crash in which the bent protrusion portion is completely crushed, the collision load input from the sub-frame structure to the automotive body side tends to be excessively high, and an occupant injury value may be increased due to the increase in the collision load.

From such a viewpoint, in the sub-frame structure according to the present invention, it is preferable to take measures to absorb the crashworthiness energy in the late stage of the crash and reduce the load input to the automotive body side. Examples of such measures include providing a deformation induction bead behind a suspension arm coupling portion on the vehicle rear side in the side member.

In the sub-frame structure according to the present invention, a shape and the number of cross members are not specifically limited. For example, a sub-frame structure in which two cross members having a substantially rectangular cross-section are arranged in a front-rear direction and which has a hash shape in a top view may be employed, or a sub-frame structure in which one cross member is arranged on a vehicle front side and which has an H-shape in a top view may be employed. However, the present invention may include two cross members 20 that are the substantially rectangular cross-section hollow member 21 and the panel-shaped member 23 as in the sub-frame structure 1 described above.

In the sub-frame structure 1, as illustrated in FIG. 1, the substantially rectangular cross-section hollow member 21 is arranged on a straight line connecting the suspension arm coupling portions 11 on the vehicle front side, and is a hollow member having a substantially rectangular cross-section in a cross-section orthogonal to the vehicle width direction. In the panel-shaped member 23, side portions 23a are respectively connected to the right and left side members 10 in such a manner that rear ends 23a1 of a side portion 23a in the vehicle width direction are positioned on the vehicle rear side of the suspension arm coupling portions 13 on the vehicle rear side.

Furthermore, the panel-shaped member 23 includes a bead portion 25 that curves in a manner protruded to the vehicle front side toward a center in the vehicle width direction from the vehicle rear side relative to the suspension arm coupling portion 13 on the vehicle rear side. The bead portion 25 is formed in such a manner that a bead width gradually increases from the center of the curve toward both ends 25a. The bead width is a width in a cross-section orthogonal to a direction along the curve of the bead portion 25. From the viewpoint of the weight reduction, in the panel-shaped member 23, a rear side portion 23b in the vehicle front-rear direction is preferably curved in a shape protruded to the vehicle front side from both ends in the vehicle width direction toward a center, and the bead portion 25 is preferably formed along the curve of the rear side portion 23b.

As described above, the sub-frame structure 1 including the substantially rectangular cross-section hollow member 21 and the panel-shaped member 23 as the cross members 20 can increase stiffness against loads input from the suspension arm coupling portions 11 and 13, the automotive body mounting portion, and the like during traveling of the vehicle. In addition, by providing the substantially rectangular cross-section hollow member 21 and the panel-shaped member 23 in the sub-frame structure 1, the stiffness of the sub-frame structure 1 against the front crash can be improved. Thus, when the collision load is applied from the front of the vehicle at the time of the front crash, the bent protrusion portion 15 can receive reaction force from the sub-frame structure 1 and can be efficiently crushed (buckled and deformed).

### [Example]

An examination for verifying an effect of the sub-frame structure of an automobile according to the present invention has been made, and will be described below.

In the present example, the crashworthiness analysis was performed on the vehicle including the sub-frame structure 1 described in the embodiment, and the crashworthiness was investigated. As illustrated in FIG. 1, the sub-frame structure 1 includes the pair of right and left side members 10 and the cross members 20, and the cross members 20 include the substantially rectangular cross-section hollow member 21 and the panel-shaped member 23.

As illustrated in FIG. 8(a), each of the side members 10 is provided with the hollow bent protrusion portion 15 that protrudes toward the vehicle front side relative to the substantially rectangular cross-section hollow member 21, and that is inclined toward the vehicle exterior side in the vehicle width direction and bent in the crank shape. In each of the bent protrusion portions 15, the opening portion 15b2 was formed in the side surface portion 15b1 on the vehicle exterior side in the inclined portion 15b inclined to the vehicle exterior side in the vehicle width direction with respect to the vehicle front-rear direction.

In the present example, as illustrated in FIG. 8, the crashworthiness of a case where the hollow cross-section closing longitudinal wall portion is provided inside the hollow bent protrusion portion 15 and the buckling strength is improved was investigated. A bent protrusion portion 15 illustrated in FIG. 8(a) is not provided with a hollow cross-section closing longitudinal wall portion (First invention example). A bent protrusion portion 15A illustrated in FIG. 8(b) is provided with a patch component 17A, which connects an upper surface 15c and a lower surface 15d to each other and closes a part of a hollow cross-section (43% > 33% of the hollow cross-section of the bent protrusion portion 15A), on an inner surface side of a trough portion 15a on a vehicle interior side in a crank-shaped bending (see second invention example in FIG. 6). On the other hand, a bent protrusion portion 15 illustrated in FIG. 8(c) is formed by joining of a reinforcement component 19 corresponding to a leading end portion of the bent protrusion portion 15 to a substantially hollow member an inside of which (entire hollow cross-section of a bent protrusion portion 15B) is closed by a hollow cross-section closing longitudinal wall portion 17B formed by bending of a part of a leading end portion (see third invention example in FIG. 7).

In the examples, with vehicles including the sub-frame structures 1 according to the first to third invention examples as targets, a crashworthiness analysis was performed with a rigid wall being caused to collide from a front of the vehicles and a fastening portion on a vehicle rear side (rear end in the vehicle front-rear direction of the side member 10 in FIG. 1) being completely fixed.

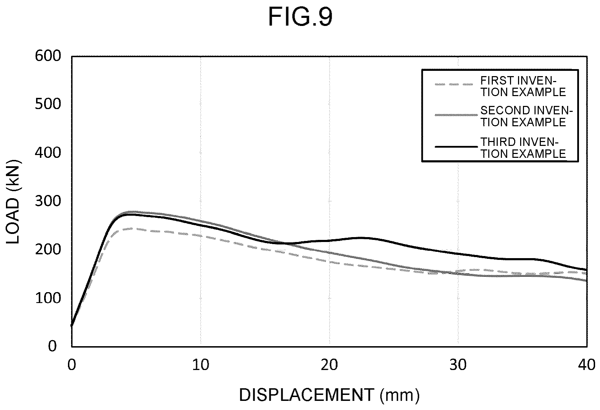

Load-displacement curves at an initial stage of the crash which curves are acquired by the crashworthiness analysis of the vehicles respectively including the sub-frame structures 1 according to the first to third invention examples are illustrated in FIG. 9. Here, the load is reaction force against the rigid wall that collides with and intrudes the vehicle front side, and the displacement is an intrusion amount of the rigid wall to the automotive body side in the vehicle front-rear direction.

As illustrated in FIG. 9, the load increases as the rigid wall collides and the displacement increases, that is, as the rigid wall intrudes, and gradually decreases after reaching a peak.

When the first to third invention examples are compared, there was no large difference in the increase in the load immediately after the start of the crash. However, in the second and third invention examples in which the patch component 17A or the hollow cross-section closing longitudinal wall portion 17B was provided in the bent protrusion portion 15, peak values of the load were respectively increased by 14% and 12% (first invention example: 243 kN, second invention example: 278 kN, and third invention example: 273 kN).

From the above result, it can be seen that the buckling strength of the bent protrusion portion 55 can be increased by providing the hollow cross-section closing longitudinal wall portion 57 on the inner side of the trough portion 50a that is a starting point of crushing in the bent protrusion portion 55. Furthermore, in the second and third invention examples, since the load shows a higher value than that of the second invention example at the initial stage of crash from the start of the crash to 40 ms, it has been suggested that the crashworthiness energy absorption amount is increased.

### Industrial Applicability

According to the present invention, it is possible to provide a sub-frame structure of an automobile in which structure crashworthiness energy is absorbed at a transient stage of an initial stage of a crash and a portion that absorbs the crashworthiness energy is shortened.

### Reference Signs List

1 SUB-FRAME STRUCTURE
10 SIDE MEMBER
10a LEADING END PORTION
11 SUSPENSION ARM COUPLING PORTION
13 SUSPENSION ARM COUPLING PORTION
15 BENT PROTRUSION PORTION
15a TROUGH PORTION
15b INCLINED PORTION
15b1 SIDE SURFACE PORTION
15b2 OPENING PORTION
15c UPPER SURFACE
15d LOWER SURFACE
17 HOLLOW CROSS-SECTION CLOSING LONGITUDINAL WALL PORTION
17A PATCH COMPONENT
17B HOLLOW CROSS-SECTION CLOSING LONGITUDINAL WALL PORTION
19 REINFORCEMENT COMPONENT
20 CROSS MEMBER
21 SUBSTANTIALLY RECTANGULAR CROSS-SECTION HOLLOW MEMBER
21a END PORTION
23 PANEL-SHAPED MEMBER
23a SIDE PORTION
23a1 REAR END
23b REAR SIDE PORTION
25 BEAD PORTION
25a BOTH END
101 SUSPENSION ARM
103 MOUNTING PORTION

## Claims

1. A sub-frame structure of an automobile, the sub-frame structure comprising: a pair of right and left side members extending in a vehicle front-rear direction and provided with suspension arm coupling portions at two positions in the vehicle front-rear direction; and a cross member extending in a vehicle width direction and having both end portions respectively connected to the right and left side members, wherein
a hollow bent protrusion portion that protrudes toward a vehicle front side relative to the cross member and is inclined toward a vehicle exterior side in the vehicle width direction and bent in a crank shape is provided at a leading end portion of each of the side members.

2. The sub-frame structure of an automobile according to claim 1, wherein an opening portion is formed in a side surface portion on a vehicle exterior side at an inclined portion inclined to the vehicle exterior side in the vehicle width direction in the bent protrusion portion.

3. The sub-frame structure of an automobile according to claim 1 or 2, wherein in the bent protrusion portion, a hollow cross-section closing longitudinal wall portion that connects an upper surface and a lower surface and that closes all or a part of a hollow cross-section is provided on an inner surface side of a trough portion on a vehicle interior side in the crank-shaped bending.

4. The sub-frame structure of an automobile according to claim 3, wherein the hollow cross-section closing longitudinal wall portion closes 1/3 or more of a hollow cross-section of the bent protrusion portion.

5. The sub-frame structure of an automobile according to claim 3 or 4, wherein the bent protrusion portion has a shape in which a leading end thereof is closed.

6. The sub-frame structure of an automobile according to any one of claims 1 to 5, wherein each of the side members is formed of a steel sheet having tensile strength of 590 MPa-grade or more.
